(19) Europäisches Patentamt
European Patent Office
Office européen des brevets

(11) **EP 4 711 968 A1**

(12) **EUROPEAN PATENT APPLICATION**
published in accordance with Art. 153(4) EPC

(43) Date of publication:
**18.03.2026 Bulletin 2026/12**

(51) International Patent Classification (IPC):
**G06F 30/17** (2020.01)

(21) Application number: **24838351.5**

(22) Date of filing: **21.03.2024**

(86) International application number:
**PCT/CN2024/083034**

(87) International publication number:
**WO 2025/011091 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.07.2023 CN 202310835855**

(71) Applicant: **Eve Power Co., Ltd.
Jingmen, Hubei 448000 (CN)**

(72) Inventors:
• **TAN, Yong
Jingmen, Hubei 448000 (CN)**
• **CHEN, Xianyang
Jingmen, Hubei 448000 (CN)**
• **ZHOU, Shuping
Jingmen, Hubei 448000 (CN)**
• **FENG, Miaomiao
Jingmen, Hubei 448000 (CN)**
• **LIU, Ning
Jingmen, Hubei 448000 (CN)**
• **HAN, Weizhen
Jingmen, Hubei 448000 (CN)**

(74) Representative: **Michalski Hüttermann & Partner
Patentanwälte mbB
Kaistraße 16A
40221 Düsseldorf (DE)**

(54) **METHOD AND APPARATUS FOR DETERMINING SIZE OF BATTERY POST, AND COMPUTER STORAGE MEDIUM**

(57) A method for determining a size of a cell terminal post is provided in the disclosure. The method includes the following. A cell structural model of a cell is established, where the cell structural model includes a terminal-post model of the terminal post, and the terminal-post model has multiple pre-determined initial terminal-post sizes. The cell structural model and each of the multiple pre-determined initial terminal-post sizes are input into a pre-built thermal simulation model for thermal simulation processing, to obtain temperature data for each of the multiple pre-determined initial terminal-post sizes. All target terminal-post sizes of the terminal post are determined.

ESTABLISH A CELL STRUCTURAL MODEL OF A CELL — 101

INPUT THE CELL STRUCTURAL MODEL AND EACH OF MULTIPLE PRE-DETERMINED INITIAL TERMINAL-POST SIZES INTO A PRE-BUILT THERMAL SIMULATION MODEL FOR THERMAL SIMULATION PROCESSING, TO OBTAIN TEMPERATURE DATA FOR EACH OF THE MULTIPLE PRE-DETERMINED INITIAL TERMINAL-POST SIZES — 102

DETERMINE ALL TARGET TERMINAL-POST SIZES OF THE TERMINAL POST ACCORDING TO TEMPERATURE DATA FOR ALL OF THE MULTIPLE PRE-DETERMINED INITIAL TERMINAL-POST SIZES — 103

FIG. 1

EP 4 711 968 A1

# EP 4 711 968 A1

**Description**

This application claims priority to Chinese Patent Application No. 2023108358555, filed July 7, 2023, the entire disclosure of which is incorporated herein by reference.

TECHNICAL FIELD

This disclosure relates to the field of cell technology, and in particular, to a method and an apparatus for determining a size of a cell terminal post, and a computer storage medium.

BACKGROUND

Under the background of carbon neutrality, new energy cells develop rapidly. Currently, the structural design of aluminum-case prismatic cells has attracted much attention. During the use of a prismatic cell, a terminal post in the cell structure is a key component connecting the cell and an external circuit.

In practical life, the size of a cell terminal post directly affects the temperature rise of structural components in the cell due to overcurrent, and directly affects the cell performance. Currently, the size of a cell terminal post is mainly designed through an orthogonal experiment. However, determining the size of a cell terminal post through the orthogonal experiment requires a long design cycle (a design cycle requires mold opening, determination of design scheme, actual measurement of operating condition data, etc.). Moreover, operations in the design cycle usually need to be manually performed, which easily leads to low accuracy in the determined sizes of cell terminal posts. As can be seen, proposing a technical solution to improve the accuracy of determining the size of a cell terminal post is of high importance.

TECHNICAL PROBLEM

The disclosure aims to solve the following technical problem: how to improve the accuracy of determining a size of a cell terminal post, which helps to reduce the temperature rise of structural components in a cell due to overcurrent and improve the cell performance.

TECHNICAL SOLUTIONS

In a first aspect, a method for determining a size of a cell terminal post is provided in the disclosure. The method includes the following. A cell structural model of a cell is established, where the cell includes a terminal post whose size is to be determined, the cell structural model includes a terminal-post model of the terminal post, and the terminal-post model has multiple pre-determined initial terminal-post sizes. The cell structural model and each of the multiple pre-determined initial terminal-post sizes are input into a pre-built thermal simulation model for thermal simulation processing, to obtain temperature data for each of the multiple pre-determined initial terminal-post sizes. All target terminal-post sizes of the terminal post are determined according to temperature data for all of the multiple pre-determined initial terminal-post sizes.

In a second aspect, an apparatus for determining a size of a cell terminal post is provided in the disclosure. The apparatus includes an establishment module, a simulation module, and a determination module. The establishment module is configured to establish a cell structural model of a cell, where the cell includes a terminal post whose size is to be determined, the cell structural model includes a terminal-post model of the terminal post, and the terminal-post model has multiple pre-determined initial terminal-post sizes. The simulation module is configured to input the cell structural model and each of the multiple pre-determined initial terminal-post sizes into a pre-built thermal simulation model for thermal simulation processing, to obtain temperature data for each of the multiple pre-determined initial terminal-post sizes. The determination module is configured to determine all target terminal-post sizes of the terminal post according to temperature data for all of the multiple pre-determined initial terminal-post sizes.

In a third aspect, another apparatus for determining a size of a cell terminal post is provided in the disclosure. The apparatus includes a memory storing executable program codes and a processor coupled to the memory. The processor is configured to invoke the executable program codes stored in the memory to execute the method for determining a size of a cell terminal post of the first aspect.

In a fourth aspect, a computer storage medium is provided in the disclosure. The computer storage medium stores computer instructions. The computer instructions, when invoked, are configured to execute the method for determining a size of a cell terminal post of the first aspect.

BENEFICIAL EFFECTS

In the disclosure, an established cell structural model and each of multiple pre-determined initial terminal-post sizes in a terminal post model included in the cell structural model are input into a pre-built thermal simulation model for thermal simulation processing, to obtain temperature data for each of the multiple pre-determined initial terminal-post sizes. As such, the accuracy of simulating the temperature data for each initial terminal-post size is improved. Furthermore, all target terminal-post sizes of the terminal post are determined according to the accurately simulated temperature data for all initial terminal-post sizes. In this way, the accuracy of determining all target terminal-post sizes of the terminal post is improved, the temperature rise of the structural components in a cell due to overcurrent is effectively reduced, and the cell performance is improved.

BRIEF DESCRIPTION OF THE DRAWINGS

FIG. 1 is a schematic flow chart of a method for determining a size of a cell terminal post according to an embodiment of the disclosure.
FIG. 2 is a schematic view of a current boundary of a cell structural model according to an embodiment of the disclosure.
FIG. 3 is a graph of a relationship curve between operating condition test parameters of a cell structural model according to an embodiment of the disclosure.
FIG. 4 is a temperature-field schematic diagram of cell temperature field data according to an embodiment of the disclosure.
FIG. 5 is a schematic flow chart of another method for determining a size of a cell terminal post according to an embodiment of the disclosure.
FIG. 6 is a graph of relationship curves between terminal-post sizes and temperature data according to an embodiment of the disclosure.
FIG. 7 is a schematic structural diagram of an apparatus for determining a size of a cell terminal post according to an embodiment of the disclosure.
FIG. 8 is a schematic structural diagram of another apparatus for determining a size of a cell terminal post according to an embodiment of the disclosure.
FIG. 9 is a schematic structural diagram of another apparatus for determining a size of a cell terminal post according to an embodiment of the disclosure.

IMPLEMENTATIONS OF THE DISCLOSURE

In an embodiment, in the first aspect and the second aspect of the disclosure, all target terminal-post sizes of the terminal post are determined according to the temperature data for all of the multiple pre-determined initial terminal-post sizes as follows. All terminal-post size pairs are determined from all of the multiple pre-determined initial terminal-post sizes according to magnitudes of all of the multiple pre-determined initial terminal-post sizes, where each terminal-post size pair includes two pre-determined initial terminal-post sizes adjacent in magnitudes. For each terminal-post size pair, a relative temperature difference of the terminal-post size pair is calculated according to temperature data for two pre-determined initial terminal-post sizes included in the terminal-post size pair. All target terminal-post sizes of the terminal post are determined according to all of the multiple pre-determined initial terminal-post sizes and relative temperature differences of all terminal-post size pairs.

In an embodiment, in the first aspect and the second aspect of the disclosure, the temperature data for each of the multiple pre-determined initial terminal-post sizes is negatively correlated with a magnitude of each of the multiple pre-determined initial terminal-post sizes. All target terminal-post sizes of the terminal post are determined according to all of the multiple pre-determined initial terminal-post sizes and the relative temperature differences of all terminal-post size pairs as follows. All target relative temperature differences satisfying a preset temperature-difference screening condition are screened out from all relative temperature differences according to the relative temperature differences of all terminal-post size pairs. For each target relative temperature difference, a target size range corresponding to the target relative temperature difference is determined according to a target terminal-post size pair corresponding to the target relative temperature difference. All target terminal-post sizes of the terminal post are determined according to all values in each of target size ranges corresponding to all target relative temperature differences.

In an embodiment, in the first aspect and the second aspect of the disclosure, all target relative temperature differences satisfying the preset temperature-difference screening condition are screened out from all relative temperature differences according to the relative temperature differences of all terminal-post size pairs as follows. For each relative temperature difference, the relative temperature difference and an adjacent temperature-difference pair of the relative temperature difference are compared to obtain a comparison result of the relative temperature difference, where an adjacent temperature-difference pair of the relative temperature difference includes two relative temperature differences adjacent in temperature-difference magnitudes to the relative temperature difference. For each relative temperature difference, whether the comparison result of the relative temperature difference satisfies the preset temperature-difference screening condition is determined. For each relative temperature difference, in the case where the comparison result of the relative temperature difference is determined to satisfy the preset temperature-difference screening condition, the relative temperature difference is determined as a target relative temperature difference.

In an embodiment, in the first aspect and the second aspect of the disclosure, a comparison result of each relative temperature difference includes a first comparison result of each relative temperature difference and a second comparison result of each relative temperature difference. The first comparison result of each relative temperature difference indicates a result obtained after comparing the relative temperature difference with a maximum temperature difference in a corresponding adjacent temperature-difference pair, and the second comparison result of each relative temperature difference indicates a result obtained after comparing the relative temperature difference with a minimum temperature difference in the corresponding adjacent temperature-difference pair. For each relative temperature difference, whether the comparison result of the relative temperature difference satisfies the preset temperature-difference screening condition is determined as follows. For each relative temperature difference, in the case where a first comparison result of the relative temperature difference represents that a first difference between the relative temperature difference and a maximum temperature difference in a corresponding adjacent temperature-difference pair is greater than a first preset difference, and a second comparison result of the relative temperature difference represents that a second difference between the relative temperature difference and a minimum temperature difference in the corresponding adjacent temperature-difference pair is less than a second preset difference, the comparison result of the relative temperature difference is determined to satisfy the preset temperature-difference screening condition. The first preset difference is greater than the second preset difference. In the case where the first comparison result of the relative temperature difference represents that the first difference between the relative temperature difference and the maximum temperature difference in the corresponding adjacent temperature-difference pair is less than or equal to the first preset difference, or, the second comparison result of the relative temperature difference represents that the second difference between the relative temperature difference and the minimum temperature difference in the corresponding adjacent temperature-difference pair is greater than or equal to the second preset difference, the comparison result of the relative temperature difference is determined to not satisfy the preset temperature-difference screening condition.

In an embodiment, in the first aspect and the second aspect of the disclosure, a calculation formula for the relative temperature difference is as follows:

$$\Delta T = \frac{|T_2 - T_1|}{T_1} \times 100\% \, ;$$

where $\Delta T$ is a relative temperature difference of any terminal-post size pair, $T_2$ is a temperature data for a minimum terminal-post size in the terminal-post size pair, and $T_1$ is a temperature data for a maximum terminal-post size in the terminal-post size pair.

In an embodiment, in the first aspect and the second aspect of the disclosure, after determining all target terminal-post sizes of the terminal post according to the temperature data for all of the multiple pre-determined initial terminal-post sizes, the method further includes the following.

For each target terminal-post size, the target terminal-post size is tested according to a preset testing method to obtain a test result of the target terminal-post size (may be performed by a test module). A type parameter of each target terminal-post size is determined according to a test result of each target terminal-post size, where the type parameter includes a qualified type or an unqualified type (may be performed by the test module). For all to-be-processed terminal-post sizes whose type parameters are unqualified types among all target terminal-post sizes, a size processing prompt for each to-be-processed terminal-post size is generated. The size processing prompt is used to prompt that a corresponding to-be-processed terminal-post size needs to be subject to a size processing operation. The size processing operation includes a size design operation, and content of the size design operation includes redesigning the corresponding to-be-processed terminal-post size (may be performed by a generation module). The type parameter of each target terminal-post size is determined according to the test result of each target terminal-post size as follows. For each target terminal-post size, whether a test result of the target terminal-post size satisfies a preset test condition is determined. In the case where the test result of the target terminal-post size is determined to satisfy the preset test condition, a type parameter of the target terminal-post size is determined as the qualified type. In the case where the test result of the target terminal-post size is determined to not satisfy the preset test condition, the type parameter of the target terminal-post size is determined as the unqualified type.

The disclosure discloses a method and an apparatus for determining a size of a cell terminal post, and a computer storage medium. In the disclosure, an established cell structural model and each of multiple pre-determined initial terminal-post sizes in a terminal post model included in the cell structural model are input into a pre-built thermal simulation model for thermal simulation processing, to obtain temperature data for each of the multiple pre-determined initial terminal-post sizes. As such, the accuracy of simulating the temperature data for each initial terminal-post size is improved. Furthermore, all target terminal-post sizes of the terminal post are determined according to the accurately simulated temperature data for all initial terminal-post sizes. In this way, the accuracy of determining all target terminal-post sizes of the terminal post is improved, the temperature rise of the structural components in a cell due to overcurrent is effectively reduced, and the cell performance is improved. A detailed illustration will be given in the following.

Embodiment 1

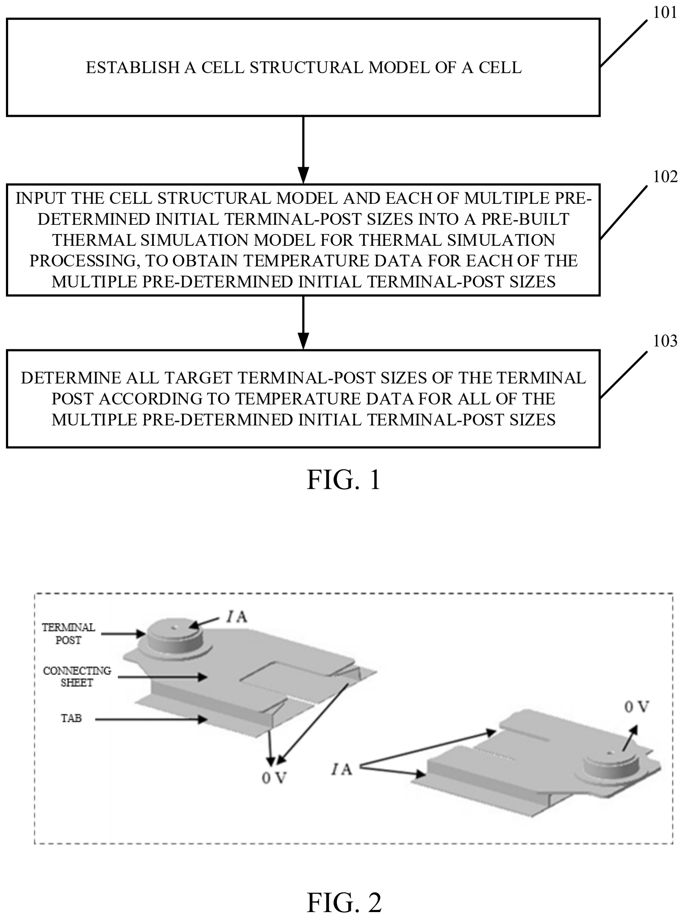

Reference is made to FIG. 1, which is a schematic flow chart of a method for determining a size of a cell terminal post according to an embodiment of the disclosure. The method for determining a size of a cell terminal post described in FIG. 1 may be applied to an apparatus for determining a size of a cell terminal post. The apparatus may include a determination device or a determination server, and the determination server may include a cloud server or a local server, which is not limited in embodiments of the disclosure. As illustrated in FIG. 1, the method for determining a size of a cell terminal post may include the following operations.

At 101, a cell structural model of a cell is established.

In embodiments of the disclosure, optionally, the cell may include a terminal post whose size is to be determined, and may also include structural components such as an aluminum case, a jelly-roll, and a smooth aluminum sheet. Specifically, corresponding component parameters may be designed for all structural components of the cell, and the cell structural model of the cell may be constructed in a 3D drawing software. The cell structural model of the cell may include a terminal-post model of the terminal post, and may also include component models of the structural components such as an aluminum case model of the aluminum case, a jelly-roll model of the jelly-roll, and a smooth aluminum sheet model of the smooth aluminum sheet. The terminal-post model has multiple pre-determined initial terminal-post sizes, which is not limited in embodiments of the disclosure.

At 102, the cell structural model and each of the multiple pre-determined initial terminal-post sizes are input into a pre-built thermal simulation model for thermal simulation processing, to obtain temperature data for each of the multiple pre-determined initial terminal-post sizes.

In embodiments of the disclosure, optionally, target contents of the model obtained by inputting the cell structural model into the pre-built thermal simulation model may include one or more of physical property parameters corresponding to each component model in all component models of the cell structural model, a current boundary of the cell structural model, a convective heat transfer coefficient of the cell structural model, a heat dissipation boundary of the cell structural model, etc., which is not limited in embodiments of the disclosure.

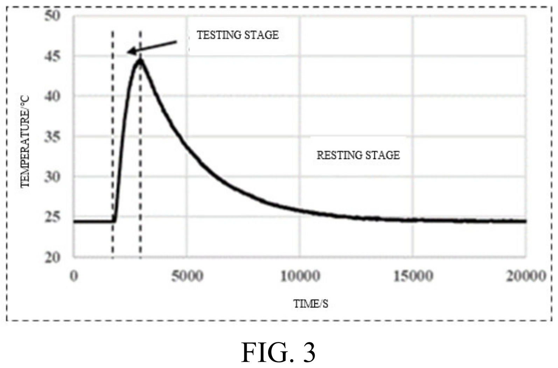

In embodiments of the disclosure, specifically, based on numerical heat transfer theory, corresponding physical property parameters may be assigned to each component model in all component models of the cell structural model. Optionally, the physical property parameters for each component model may include one or more of thermal conductivity of the component model, density of the component model, specific heat capacity of the component model, etc. Optionally, the cell structural model may further include a current inlet and a voltage outlet. As illustrated in FIG. 2, current $I$ in the current boundary may enter from the current inlet, and then flow through all overcurrent component models in all component models of the cell structural model (the sequence of current flow within the overcurrent component models may be: first through the terminal-post model, then through a connecting sheet model between the terminal-post model and a tab model, and finally through the tab model). Finally, the current $I$ flows to the voltage outlet (the voltage outlet is grounded with a voltage value of zero volt). The convective heat transfer coefficient and the heat dissipation boundary (the heat dissipation boundary may include a cooling heat-dissipation boundary and a heating heat-dissipation boundary) of the cell structural model may be determined according to test temperatures in the operating condition test parameters of a single cell corresponding to the cell structural model. As illustrated in FIG. 3, the operating condition curve in FIG. 3 includes a cell heating curve and a cell cooling curve. The convective heat transfer coefficient of a convective heat transfer surface among surfaces of the cell structural model and the cooling heat-dissipation boundary of the cell structural model during a cooling process may be determined according to the cell cooling curve. Since the cell heating curve and the cell cooling curve are tested under the same environment, the heating heat-dissipation boundary of the cell structural model during the heating process may be determined through the cooling heat-dissipation boundary of the cell structural model during the cooling process, which is not limited in embodiments of the disclosure.

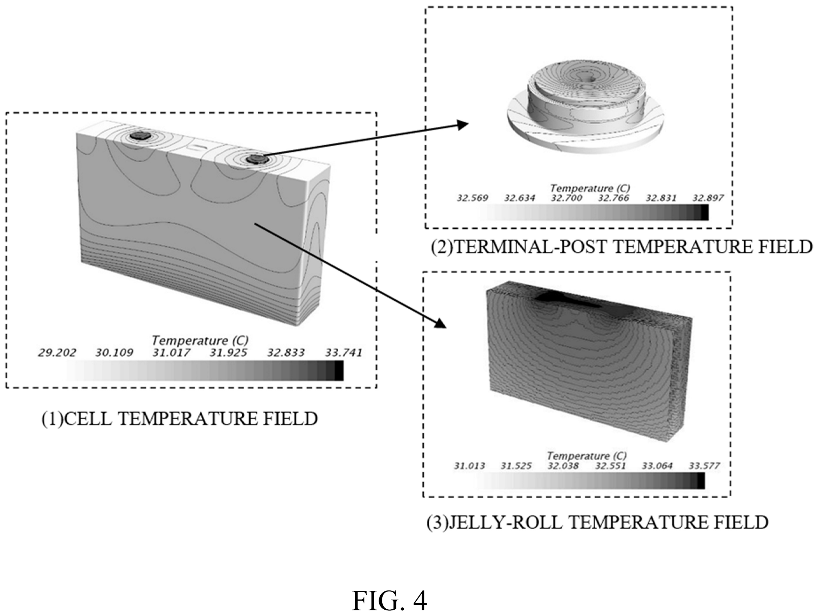

In embodiments of the disclosure, specifically, as illustrated in FIG. 4(1), the temperature data for all initial terminal-post sizes may include cell temperature field data. As illustrated in FIG. 4(2) and FIG. 4(3), the cell temperature field data may include terminal-post temperature field data and jelly-roll temperature field data.

At 103, all target terminal-post sizes of the terminal post are determined according to temperature data for all of the multiple pre-determined initial terminal-post sizes.

In embodiments of the disclosure, optionally, the temperature data for each initial terminal-post size may include one or more of terminal-post temperature data corresponding to each initial terminal-post size, jelly-roll temperature data corresponding to each initial terminal-post size, jelly-roll temperature data corresponding to each initial terminal-post size, etc., which is not limited in embodiments of the disclosure.

As can be seen, in the method for determining a size of a cell terminal post described in embodiments of the disclosure, an established cell structural model and each of multiple pre-determined initial terminal-post sizes in a terminal post model included in the cell structural model are input into a pre-built thermal simulation model for thermal simulation processing, to obtain temperature data for each of the multiple pre-determined initial terminal-post sizes. As such, the accuracy of simulating the temperature data for each initial terminal-post size is improved. Furthermore, all target terminal-post sizes of the terminal post are determined according to the accurately simulated temperature data for all initial terminal-post sizes. In this way, the accuracy of determining all target terminal-post sizes of the terminal post is improved, the temperature rise of the structural components in a cell due to overcurrent is effectively reduced, and the cell performance is improved.

In an optional embodiment, before the cell structural model and each of the multiple pre-determined initial terminal-post sizes are input into the pre-built thermal simulation model for thermal simulation processing to obtain the temperature data for each of the multiple pre-determined initial terminal-post sizes at 102, the method may further include the following. Cell parameters of the cell are obtained. A reference cell that matches to the cell is screened out from all initial cells stored in a preset cell database according to the cell parameters of the cell, where the reference cell has a corresponding reference terminal-post size. Each of the multiple pre-determined initial terminal-post sizes is adjusted according to the reference terminal-post size corresponding to the reference cell, to obtain each of the multiple pre-determined initial terminal-post sizes that is adjusted. Further, the operation of inputting the cell structural model and each of the multiple pre-determined initial terminal-post sizes into the pre-built thermal simulation model for thermal simulation processing to obtain the temperature data for each of the multiple pre-determined initial terminal-post sizes at 102 is performed, where each of the multiple pre-determined initial terminal-post sizes in the operation is each of the multiple pre-determined initial terminal-post sizes that is adjusted.

In embodiments of the disclosure, the reference cell that matches to the cell may be a cell whose similarity to the cell is greater than or equal to a preset similarity. Optionally, a similarity between the cell and each initial cell may be based on a similarity between cell parameters of the cell and cell parameters of each initial cell. The cell parameters may include one or more of cell type, cell shape, cell component, and size parameters of the corresponding cell component, etc. Optionally, the preset similarity may be 70%, 80%, or other set values, which is not limited in embodiments of the disclosure.

As can be seen, in this optional embodiment, the reference cell that matches to the cell may be accurately screened out from all initial cells stored in the preset cell database according to the obtained cell parameters of the cell, and each initial terminal-post size of the cell may be adjusted according to the accurately determined reference terminal-post size corresponding to the reference cell. In this way, the accuracy of adjusting each initial terminal-post size may be improved, thereby facilitating an improvement in the accuracy of processing the thermal simulation processing for each initial terminal-post size.

Embodiment 2

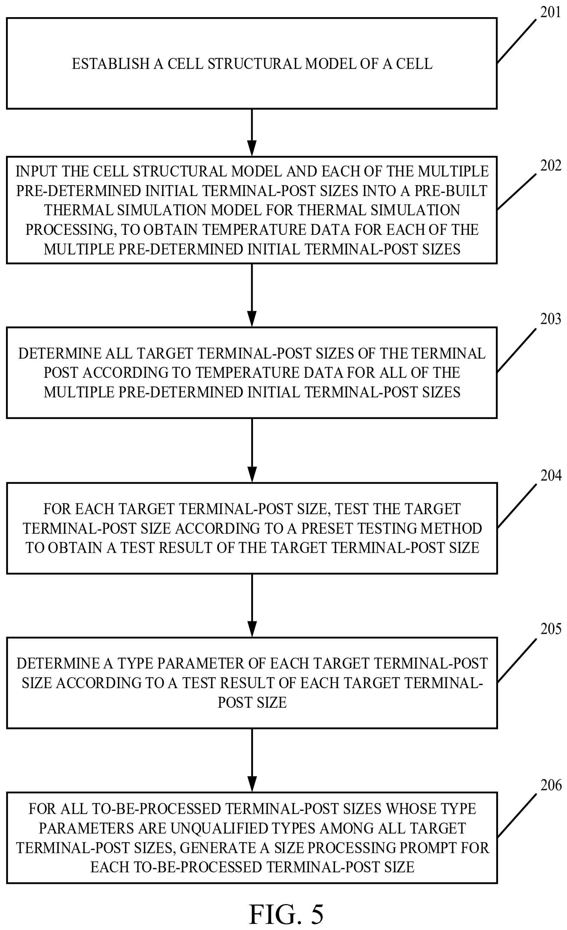

Reference is made to FIG. 5, which is a schematic flow chart of another method for determining a size of a cell terminal post according to an embodiment of the disclosure. The method for determining a size of a cell terminal post described in FIG. 5 may be applied to an apparatus for determining a size of a cell terminal post. The apparatus may include a determination device or a determination server, and the determination server may include a cloud server or a local server, which is not limited in embodiments of the disclosure. As illustrated in FIG. 5, the method for determining a size of a cell terminal post may include the following operations.

At 201, a cell structural model of a cell is established.

At 202, the cell structural model and each of the multiple pre-determined initial terminal-post sizes are input into a pre-built thermal simulation model for thermal simulation processing, to obtain temperature data for each of the multiple pre-determined initial terminal-post sizes.

At 203, all target terminal-post sizes of the terminal post are determined according to temperature data for all of the multiple pre-determined initial terminal-post sizes.

In embodiments of the disclosure, specific technical details and explanations of technical terms for operations at 201 to 203 may refer to the descriptions of operations at 101 to 103 in Embodiment 1, which will not be repeated herein.

At 204, for each target terminal-post size, the target terminal-post size is tested according to a preset testing method to obtain a test result of the target terminal-post size.

In embodiments of the disclosure, optionally, testing each target terminal-post size according to the preset testing method may involve making a cell sample corresponding to each target terminal-post size, and then testing a cell sample corresponding to the target terminal-post size according to the preset testing method. The testing method may be the same as the testing method used for historical cell samples of the same type as the cell sample, which is not limited in embodiments of the disclosure.

At 205, a type parameter of each target terminal-post size is determined according to a test result of each target terminal-post size.

In embodiments of the disclosure, the type parameter includes a qualified type or an unqualified type. Optionally, for each target terminal-post size, the type parameter of the target terminal-post size being the qualified type indicates that the cell sample corresponding to the target terminal-post size exhibits excellent performance, and the type parameter of the target terminal-post size being the unqualified type indicates that the cell sample corresponding to the target terminal-post size exhibits poor performance, which is not limited in embodiments of the disclosure.

At 206, for all to-be-processed terminal-post sizes whose type parameters are unqualified types among all target terminal-post sizes, a size processing prompt for each to-be-processed terminal-post size is generated.

In embodiments of the disclosure, the size processing prompt is used to prompt that a corresponding to-be-processed terminal-post size needs to be subject to a size processing operation. The size processing operation includes a size design operation, and content of the size design operation includes redesigning the corresponding to-be-processed terminal-post size. Optionally, for each to-be-processed terminal-post size that is redesigned, the above operations at 201 to 203 may be repeated, which is not limited in embodiments of the disclosure.

As can be seen, in the method for determining a size of a cell terminal post described in embodiments of the disclosure, an established cell structural model and each of multiple pre-determined initial terminal-post sizes in a terminal post model included in the cell structural model are input into a pre-built thermal simulation model for thermal simulation processing, to obtain temperature data for each of the multiple pre-determined initial terminal-post sizes. As such, the accuracy of simulating the temperature data for each initial terminal-post size is improved. Furthermore, all target terminal-post sizes of the terminal post are determined according to the accurately simulated temperature data for all initial terminal-post sizes. In this way, the accuracy of determining all target terminal-post sizes of the terminal post is improved, the temperature rise of the structural components in a cell due to overcurrent is effectively reduced, and the cell performance is improved. Moreover, the type parameter of each target terminal-post size may be accurately determined according to the test result of each target terminal-post size. For all to-be-processed terminal-post sizes whose type parameters are accurately determined to be unqualified types, size processing prompts for all to-be-processed terminal-post sizes may be generated. In this way, the accuracy of generating the size processing prompt may be improved, which helps to improve the efficiency of obtaining the size processing prompt and improve the timeliness of processing the corresponding to-be-processed terminal-post size through the size processing prompt.

In an optional embodiment, in the operation at 203, all target terminal-post sizes of the terminal post are determined according to temperature data for all of the multiple pre-determined initial terminal-post sizes as follows. All terminal-post size pairs are determined from all of the multiple pre-determined initial terminal-post sizes according to magnitudes of all of the multiple pre-determined initial terminal-post sizes, where each terminal-post size pair includes two pre-determined initial terminal-post sizes adjacent in magnitudes. For each terminal-post size pair, a relative temperature difference of the terminal-post size pair is calculated according to temperature data for two pre-determined initial terminal-post sizes included in the terminal-post size pair. All target terminal-post sizes of the terminal post are determined according to all of the multiple pre-determined initial terminal-post sizes and relative temperature differences of all terminal-post size pairs.

For example, an initial terminal-post size 1, an initial terminal-post size 2, and an initial terminal-post size 3 are assumed exist, where the magnitude of the initial terminal-post size 1 is smaller than the magnitude of the initial terminal-post size 2 and the magnitude of the initial terminal-post size 2 is smaller than the magnitude of the initial terminal-post size 3. In this case, all determined terminal-post size pairs include a terminal-post size pair A and a terminal-post size pair *B.* In the case where the terminal-post size pair *A* includes the initial terminal-post size 1 and the initial terminal-post size 2, the terminal-post size pair B includes the initial terminal-pose size 2 and the initial terminal-post size 3.

As can be seen, in this optional embodiment, all terminal-post size pairs may be accurately determined from all initial terminal-post sizes according to the magnitudes of all initial terminal-post sizes. The relative temperature difference of each terminal-post size pair may be calculated according to the accurately determined temperature data for two initial terminal-post sizes included in each terminal-post size pair. Therefore, the accuracy of calculating the relative temperature difference may be improved. Furthermore, all target terminal-post sizes of the terminal post are determined according to all initial terminal-post sizes and relative temperature differences of all terminal-post size pairs, which can improve the accuracy and reliability of determining all target terminal-post sizes of the terminal post.

In this optional embodiment, as an optional implementation, the temperature data for each of the multiple pre-determined initial terminal-post sizes is negatively correlated with a magnitude of each of the multiple pre-determined initial terminal-post sizes. All target terminal-post sizes of the terminal post are determined according to all of the multiple pre-determined initial terminal-post sizes and the relative temperature differences of all terminal-post size pairs as follows. All target relative temperature differences satisfying a preset temperature-difference screening condition are screened out from all relative temperature differences according to the relative temperature differences of all terminal-post size pairs.

For each target relative temperature difference, a target size range corresponding to the target relative temperature difference is determined according to a target terminal-post size pair corresponding to the target relative temperature difference. All target terminal-post sizes of the terminal post are determined according to all values in each of target size ranges corresponding to all target relative temperature differences.

In embodiments of the disclosure, optionally, the preset temperature-difference screening condition may be a screening condition corresponding to a comparison result obtained after comparing multiple relative temperature differences. Specifically, the minimum value in the target size range corresponding to each target relative temperature difference may be a smaller size of the two initial terminal-post sizes included in the target terminal-post size pair corresponding to the target relative temperature difference. The maximum value in the target size range corresponding to each target relative temperature difference may be a greater size of the two initial terminal-post sizes included in the target terminal-post size pair corresponding to the target relative temperature difference, which is not limited in embodiments of the disclosure.

As can be seen, in this optional implementation, all target relative temperature differences satisfying a preset temperature-difference screening condition may be accurately screened out from all relative temperature differences according to the relative temperature differences of all terminal-post size pairs. A target size range corresponding to the target relative temperature difference may be accurately determined according to a target terminal-post size pair corresponding to the target relative temperature difference that is accurately screened out. All target terminal-post sizes of the terminal post may be determined according to all values in each of target size ranges corresponding to all target relative temperature differences that are accurately screened out. Therefore, the speed and accuracy of determining the target terminal-post sizes can be improved.

In this optional implementation, optionally, all target relative temperature differences satisfying the preset temperature-difference screening condition are screened out from all relative temperature differences according to the relative temperature differences of all terminal-post size pairs as follows. For each relative temperature difference, the relative temperature difference and an adjacent temperature-difference pair of the relative temperature difference are compared to obtain a comparison result of the relative temperature difference. For each relative temperature difference, whether the comparison result of the relative temperature difference satisfies the preset temperature-difference screening condition is determined. For each relative temperature difference, in the case where the comparison result of the relative temperature difference is determined to satisfy the preset temperature-difference screening condition, the relative temperature difference is determined as a target relative temperature difference.

In embodiments of the disclosure, an adjacent temperature-difference pair of each relative temperature difference includes two relative temperature differences adjacent in temperature-difference magnitudes to the relative temperature difference. Optionally, an initial terminal-post size may include one or more of terminal-post diameter, terminal-post radius, terminal-post perimeter, terminal-post base area, etc., which is not limited in embodiments of the disclosure.

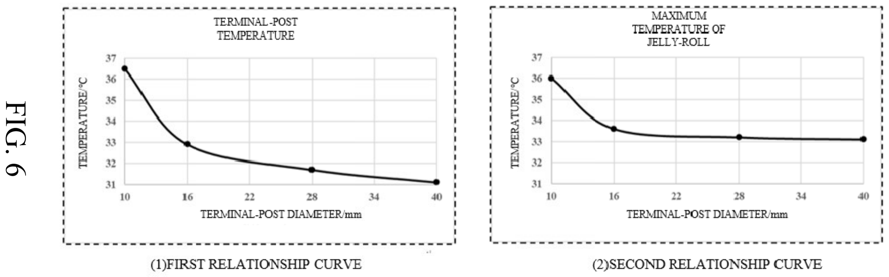

In embodiments of the disclosure, optionally, there is a corresponding relationship curve between the magnitude and the temperature data for each initial terminal-post size, as illustrated in FIG. 6 (each initial terminal-post size includes the terminal-post diameter of the initial terminal post, and the unit for the terminal-post diameter of each initial terminal post is millimeter). FIG. 6(1) shows a first relationship curve between the terminal-post diameter and the terminal-post temperature for each initial terminal-post size. FIG. 6(2) shows a second relationship curve between the terminal-post diameter and the maximum jelly-roll temperature for each initial terminal-post size. Optionally, two relative temperature differences adjacent in temperature-difference magnitudes correspond to terminal-post size pairs whose size magnitudes are also adjacent, as illustrated in table 1 (table 1 is calculated according to the temperature data in FIG. 6). In table 1, terminal-pose size pair φ10→φ16 includes an initial terminal-post size with a diameter of 10mm and an initial terminal-post size with a diameter of 16mm. Terminal-pose size pair φ16→φ28 includes an initial terminal-post size with a diameter of 16mm and an initial terminal-post size with a diameter of 28mm. Terminal-pose size pair φ28→φ40 includes an initial terminal-post size with a diameter of 28mm and an initial terminal-post size with a diameter of 40mm, and so on. In table 1, when the relative temperature difference is terminal-post relative temperature difference 2 (difference value of 3.6%), the adjacent temperature-difference pair of the terminal-post relative temperature difference 2 includes terminal-post relative temperature difference 1 (difference value of 9.9%) and terminal-post relative temperature difference 3 (difference value of 1.8%).

Table 1

| Terminal-post size pair | Terminal-post relative temperature difference | Jelly-roll relative temperature difference |
|---|---|---|
| φ10→φ16 | 9.9% | 6.7% |
| φ16→φ28 | 3.6% | 1.2% |
| φ28→φ40 | 1.8% | 0.6% |

As can be seen, in this optional implementation, each relative temperature difference and the corresponding adjacent temperature-difference pair may be compared to accurately obtain the comparison result of the relative temperature difference. The accurately obtained comparison result of each relative temperature difference is determined, and the relative temperature difference whose comparison result is determined to satisfy the preset temperature-difference screening condition is determined as the target relative temperature difference. In this way, the accuracy of screening out the target relative temperature difference may be improved, which helps to reduce the occurrence of processing relative temperature differences that do not require size determination, thereby further improving the speed and accuracy of determining the target terminal-post size.

In this optional implementation, further optionally, a comparison result of each relative temperature difference includes a first comparison result of each relative temperature difference and a second comparison result of each relative temperature difference. The first comparison result of each relative temperature difference indicates a result obtained after comparing the relative temperature difference with a maximum temperature difference in a corresponding adjacent temperature-difference pair, and the second comparison result of each relative temperature difference indicates a result obtained after comparing the relative temperature difference with a minimum temperature difference in the corresponding adjacent temperature-difference pair. For each relative temperature difference, whether the comparison result of the relative temperature difference satisfies the preset temperature-difference screening condition is determined as follows. For each relative temperature difference, in the case where a first comparison result of the relative temperature difference represents that a first difference between the relative temperature difference and a maximum temperature difference in a corresponding adjacent temperature-difference pair is greater than a first preset difference, and a second comparison result of the relative temperature difference represents that a second difference between the relative temperature difference and a minimum temperature difference in the corresponding adjacent temperature-difference pair is less than a second preset difference, the comparison result of the relative temperature difference is determined to satisfy the preset temperature-difference screening condition. The first preset difference is greater than the second preset difference. In the case where the first comparison result of the relative temperature difference represents that the first difference between the relative temperature difference and the maximum temperature difference in the corresponding adjacent temperature-difference pair is less than or equal to the first preset difference, or, the second comparison result of the relative temperature difference represents that the second difference between the relative temperature difference and the minimum temperature difference in the corresponding adjacent temperature-difference pair is greater than or equal to the second preset difference, the comparison result of the relative temperature difference is determined to not satisfy the preset temperature-difference screening condition.

In embodiments of the disclosure, the first preset difference is greater than the second preset difference. Specifically, the first preset difference may be 6%, and the second preset difference may be 2%.

For example, as illustrated in table 1, a first comparison result of the terminal-post relative temperature difference 2 indicates that the difference between the terminal-post relative temperature difference 2 and the terminal-post relative temperature difference 1 (9.9% - 3.6% = 6.3%) is greater than 6%, and a second comparison result of the terminal-post relative temperature difference 2 indicates that the difference between the terminal-post relative temperature difference 2 and the terminal-post relative temperature difference 3 (3.6% - 1.8% = 1.8%) is less than 2%. Therefore, it may be determined that the terminal-post relative temperature difference 2 satisfies the preset temperature-difference screening condition.

As can be seen, in this optional implementation, for each relative temperature difference, whether the comparison result of the relative temperature difference satisfies the preset temperature-difference screening condition may be determined according to the first comparison result and the second comparison result of the relative temperature difference. In this way, the accuracy of determining the comparison result of the relative temperature difference may be improved, which helps to improve the accuracy and reliability of screening out all target relative temperature differences.

In this optional embodiment, as another optional implementation, a calculation formula for the relative temperature difference is as follows:

$$\Delta T = \frac{|T_2 - T_1|}{T_1} \times 100\% ;$$

where $\Delta T$ is a relative temperature difference of any terminal-post size pair, $T_2$ is a temperature data for a minimum terminal-post size in the terminal-post size pair, and $T_1$ is a temperature data for a maximum terminal-post size in the terminal-post size pair.

In embodiments of the disclosure, as illustrated in FIG. 6, for the terminal-post size pair $\varphi 10 \rightarrow \varphi 16$, the terminal-post temperature data for two initial terminal-post sizes in this terminal-post size pair are 36.5°C and 31.9°C. The terminal-post relative temperature difference of this terminal-post size pair may be (36.5 - 31.9)/36.5 × 100% ≈ 9.9%.

As can be seen, in this optional implementation, the relative temperature difference of each terminal-post size pair may be calculated according to the temperature data for two initial terminal-post sizes in the terminal-post size pair and the calculation formula for the relative temperature difference. In this way, the accuracy and reliability of calculating the relative temperature difference may be improved, which helps to improve the accuracy of determining all target terminal-post sizes of the terminal post through the accurately calculated relative temperature differences.

In another optional embodiment, in the operation at 205, the type parameter of each target terminal-post size is determined according to the test result of each target terminal-post size as follows. For each target terminal-post size, whether a test result of the target terminal-post size satisfies a preset test condition is determined. In the case where the test result of the target terminal-post size is determined to satisfy the preset test condition, a type parameter of the target terminal-post size is determined as the qualified type. In the case where the test result of the target terminal-post size is determined to not satisfy the preset test condition, the type parameter of the target terminal-post size is determined as the unqualified type.

In embodiments of the disclosure, the test result of each target terminal-post size may include a result obtained from testing temperature-rise data for each target terminal-post size due to overcurrent, which is not limited in embodiments of the disclosure.

As can be seen, in this optional embodiment, whether the test result of each target terminal-post size satisfies the preset test condition may be determined to obtain a determination result of the target terminal-post size, and the type parameter of each target terminal-post size may be determined according to the determination result of each target terminal-post size. In this way, the accuracy of determining the type parameter of each target terminal-post size may be improved, which helps to improve the accuracy of generating the size processing prompts for the to-be-processed terminal-post sizes whose type parameter are unqualified types, and helps to improve the efficiency of obtaining the size processing prompts and the timeliness of processing the size processing prompts.

Embodiment 3

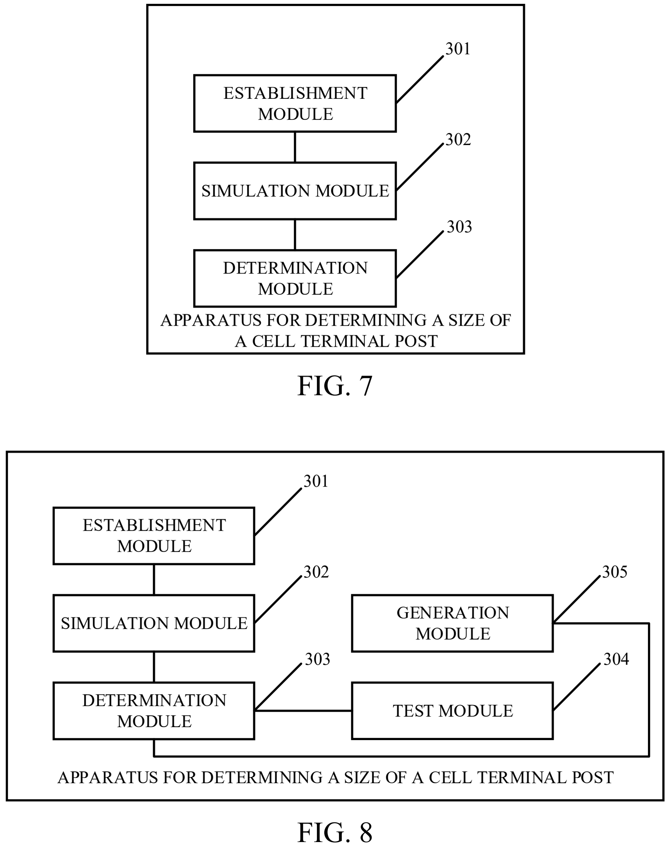

Reference is made to FIG. 7, which is a schematic structural diagram of an apparatus for determining a size of a cell terminal post according to an embodiment of the disclosure. The apparatus for determining a size of a cell terminal post described in FIG. 7 may include a determination device or a determination server, and the determination server may include a cloud server or a local server, which is not limited in embodiments of the disclosure. As illustrated in FIG. 7, the apparatus for determining a size of a cell terminal post may include an establishment module 301, a simulation module 302, and a determination module 303.

The establishment module 301 is configured to establish a cell structural model of a cell, where the cell includes a terminal post whose size is to be determined, the cell structural model includes a terminal-post model of the terminal post, and the terminal-post model has multiple pre-determined initial terminal-post sizes.

The simulation module 302 is configured to input the cell structural model and each of the multiple pre-determined initial terminal-post sizes into a pre-built thermal simulation model for thermal simulation processing, to obtain temperature data for each of the multiple pre-determined initial terminal-post sizes.

The determination module 303 is configured to determine all target terminal-post sizes of the terminal post according to temperature data for all of the multiple pre-determined initial terminal-post sizes.

As can be seen, in the apparatus for determining a size of a cell terminal post described in embodiments of the disclosure, an established cell structural model and each of multiple pre-determined initial terminal-post sizes in a terminal post model included in the cell structural model are input into a pre-built thermal simulation model for thermal simulation processing, to obtain temperature data for each of the multiple pre-determined initial terminal-post sizes. As such, the accuracy of simulating the temperature data for each initial terminal-post size is improved. Furthermore, all target terminal-post sizes of the terminal post are determined according to the accurately simulated temperature data for all initial terminal-post sizes. In this way, the accuracy of determining all target terminal-post sizes of the terminal post is improved, the temperature rise of the structural components in a cell due to overcurrent is effectively reduced, and the cell performance is improved.

In terms of determining all target terminal-post sizes of the terminal post according to the temperature data for all of the multiple pre-determined initial terminal-post sizes, the determination module 303 is specifically configured to: determine all terminal-post size pairs from all of the multiple pre-determined initial terminal-post sizes according to magnitudes of all of the multiple pre-determined initial terminal-post sizes, where each terminal-post size pair includes two pre-determined initial terminal-post sizes adjacent in magnitudes; for each terminal-post size pair, calculate a relative temperature difference of the terminal-post size pair according to temperature data for two pre-determined initial terminal-post sizes included in the terminal-post size pair; and determine all target terminal-post sizes of the terminal post according to all of the multiple pre-determined initial terminal-post sizes and relative temperature differences of all terminal-post size pairs.

As can be seen, in this optional embodiment, all terminal-post size pairs may be accurately determined from all initial terminal-post sizes according to the magnitudes of all initial terminal-post sizes. The relative temperature difference of each terminal-post size pair may be calculated according to the accurately determined temperature data for two initial terminal-post sizes included in each terminal-post size pair. Therefore, the accuracy of calculating the relative temperature difference may be improved. Furthermore, all target terminal-post sizes of the terminal post are determined according to all initial terminal-post sizes and relative temperature differences of all terminal-post size pairs, which can improve the accuracy and reliability of determining all target terminal-post sizes of the terminal post.

In this optional embodiment, in an embodiment, the temperature data for each of the multiple pre-determined initial terminal-post sizes is negatively correlated with a magnitude of each of the multiple pre-determined initial terminal-post sizes. In terms of determining all target terminal-post sizes of the terminal post according to all of the multiple pre-determined initial terminal-post sizes and the relative temperature differences of all terminal-post size pairs, the determination module 303 is specifically configured to: screen out, from all relative temperature differences, all target relative temperature differences satisfying a preset temperature-difference screening condition according to the relative temperature differences of all terminal-post size pairs; for each target relative temperature difference, determine a target size range corresponding to the target relative temperature difference according to a target terminal-post size pair corresponding to the target relative temperature difference; and determine all target terminal-post sizes of the terminal post according to all values in each of target size ranges corresponding to all target relative temperature differences.

As can be seen, in this optional implementation, all target relative temperature differences satisfying a preset temperature-difference screening condition may be accurately screened out from all relative temperature differences according to the relative temperature differences of all terminal-post size pairs. A target size range corresponding to the target relative temperature difference may be accurately determined according to a target terminal-post size pair corresponding to the target relative temperature difference that is accurately screened out. All target terminal-post sizes of the terminal post may be determined according to all values in each of target size ranges corresponding to all target relative temperature differences that are accurately screened out. Therefore, the speed and accuracy of determining the target terminal-post sizes can be improved.

In this optional implementation, optionally, in terms of screening out, from all relative temperature differences, all target relative temperature differences satisfying the preset temperature-difference screening condition according to the relative temperature differences of all terminal-post size pairs, the determination module 303 is specifically configured to: for each relative temperature difference, compare the relative temperature difference and an adjacent temperature-difference pair of the relative temperature difference to obtain a comparison result of the relative temperature difference, where an adjacent temperature-difference pair of the relative temperature difference includes two relative temperature differences adjacent in temperature-difference magnitudes to the relative temperature difference; for each relative temperature difference, determine whether the comparison result of the relative temperature difference satisfies the preset temperature-difference screening condition; and for each relative temperature difference, in response to determining that the comparison result of the relative temperature difference satisfies the preset temperature-difference screening condition, determine the relative temperature difference as a target relative temperature difference.

As can be seen, in this optional implementation, each relative temperature difference and the corresponding adjacent temperature-difference pair may be compared to accurately obtain the comparison result of the relative temperature difference. The accurately obtained comparison result of each relative temperature difference is determined, and the relative temperature difference whose comparison result is determined to satisfy the preset temperature-difference screening condition is determined as the target relative temperature difference. In this way, the accuracy of screening out the target relative temperature difference may be improved, which helps to reduce the occurrence of processing relative temperature differences that do not require size determination, thereby further improving the speed and accuracy of determining the target terminal-post size.

In this optional implementation, further optionally, a comparison result of each relative temperature difference includes a first comparison result of each relative temperature difference and a second comparison result of each relative temperature difference. The first comparison result of each relative temperature difference indicates a result obtained after comparing the relative temperature difference with a maximum temperature difference in a corresponding adjacent temperature-difference pair, and the second comparison result of each relative temperature difference indicates a result obtained after comparing the relative temperature difference with a minimum temperature difference in the corresponding adjacent temperature-difference pair. In terms of for each relative temperature difference, determining whether the comparison result of the relative temperature difference satisfies the preset temperature-difference screening condition, the determination module 303 is specifically configured to: for each relative temperature difference, in response to a first comparison result of the relative temperature difference representing that a first difference between the relative temperature difference and a maximum temperature difference in a corresponding adjacent temperature-difference pair is greater than a first preset difference, and a second comparison result of the relative temperature difference representing that a second difference between the relative temperature difference and a minimum temperature difference in the corresponding adjacent temperature-difference pair is less than a second preset difference, determine that the comparison result of the relative temperature difference satisfies the preset temperature-difference screening condition, where the first preset difference is greater than the second preset difference; and in response to the first comparison result of the relative temperature difference representing that the first difference between the relative temperature difference and the maximum temperature difference in the corresponding adjacent temperature-difference pair is less than or equal to the first preset difference, or, the second comparison result of the relative temperature difference representing that the second difference between the relative temperature difference and the minimum temperature difference in the corresponding adjacent temperature-difference pair is greater than or equal to the second preset difference, determine that the comparison result of the relative temperature difference does not satisfy the preset temperature-difference screening condition.

As can be seen, in this optional implementation, for each relative temperature difference, whether the comparison result of the relative temperature difference satisfies the preset temperature-difference screening condition may be determined according to the first comparison result and the second comparison result of the relative temperature difference. In this way, the accuracy of determining the comparison result of the relative temperature difference may be improved, which helps to improve the accuracy and reliability of screening out all target relative temperature differences.

In this optional embodiment, as another optional implementation, a calculation formula for the relative temperature difference is as follows:

$$\Delta T = \frac{\left|T_2 - T_1\right|}{T_1} \times 100\% ;$$

where $\Delta T$ is a relative temperature difference of any terminal-post size pair, $T_2$ is a temperature data for a minimum terminal-post size in the terminal-post size pair, and $T_1$ is a temperature data for a maximum terminal-post size in the terminal-post size pair.

As can be seen, in this optional implementation, the relative temperature difference of each terminal-post size pair may be calculated according to the temperature data for two initial terminal-post sizes in the terminal-post size pair and the calculation formula for the relative temperature difference. In this way, the accuracy and reliability of calculating the relative temperature difference may be improved, which helps to improve the accuracy of determining all target terminal-post sizes of the terminal post through the accurately calculated relative temperature differences.

In another optional embodiment, as illustrated in FIG. 8, the apparatus may further include a test module 304, a determination module 303, and a generation module 305.

After the determination module 303 determines all target terminal-post sizes of the terminal post according to the temperature data for all of the multiple pre-determined initial terminal-post sizes, the test module 304 is configured to, for each target terminal-post size, test the target terminal-post size according to a preset testing method to obtain a test result of the target terminal-post size.

The determination module 303 is further configured to determine a type parameter of each target terminal-post size according to a test result of each target terminal-post size, where the type parameter includes a qualified type or an unqualified type.

The generation module 305 is configured to, for all to-be-processed terminal-post sizes whose type parameters are unqualified types among all target terminal-post sizes, generate a size processing prompt for each to-be-processed terminal-post size. The size processing prompt is used to prompt that a corresponding to-be-processed terminal-post size needs to be subject to a size processing operation. The size processing operation includes a size design operation, and content of the size design operation includes redesigning the corresponding to-be-processed terminal-post size.

As can be seen, in this optional embodiment, the type parameter of each target terminal-post size may be accurately determined according to the test result of each target terminal-post size. For all to-be-processed terminal-post sizes whose type parameters are accurately determined to be unqualified types, size processing prompts for all to-be-processed terminal-post sizes may be generated. In this way, the accuracy of generating the size processing prompt may be improved, which helps to improve the efficiency of obtaining the size processing prompt and improve the timeliness of processing the corresponding to-be-processed terminal-post size through the size processing prompt.

In this optional embodiment, as an optional implementation, in terms of determining the type parameter of each target terminal-post size according to the test result of each target terminal-post size, the determination module 303 is specifically configured to: for each target terminal-post size, determine whether a test result of the target terminal-post size satisfies a preset test condition; in response to determining that the test result of the target terminal-post size satisfies the preset test condition, determine a type parameter of the target terminal-post size as the qualified type; and in response to determining that the test result of the target terminal-post size does not satisfy the preset test condition, determine the type parameter of the target terminal-post size as the unqualified type.

As can be seen, in this optional embodiment, whether the test result of each target terminal-post size satisfies the preset test condition may be determined to obtain a determination result of the target terminal-post size, and the type parameter of each target terminal-post size may be determined according to the determination result of each target terminal-post size. In this way, the accuracy of determining the type parameter of each target terminal-post size may be improved, which helps to improve the accuracy of generating the size processing prompts for the to-be-processed terminal-post sizes whose type parameter are unqualified types, and helps to improve the efficiency of obtaining the size processing prompts and the timeliness of processing the size processing prompts.

Embodiment 4

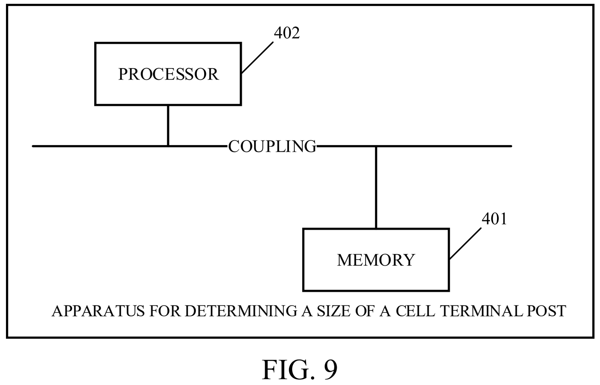

Reference is made to FIG. 9, which is a schematic structural diagram of another apparatus for determining a size of a cell terminal post according to an embodiment of the disclosure. As illustrated in FIG. 9, the apparatus for determining a size of a cell terminal post may include a memory 401 storing executable program codes, a processor 402 coupled to the memory 401. The processor 402 is configured to invoke the executable program codes stored in the memory 401 to execute operations in the method for determining a size of a cell terminal post described in embodiment 1 or embodiment 2 of the disclosure.

Embodiment 5

A computer storage medium is provided in embodiments of the disclosure. The computer storage medium stores computer instructions. The computer instructions, when invoked, are configured to execute operations in the method for determining a size of a cell terminal post described in embodiment 1 or embodiment 2 of the disclosure.

Embodiment 6

A computer program product is disclosed in embodiments of the disclosure. The computer program product includes a non-transitory computer readable storage medium storing computer programs. The computer programs are operable with a computer to execute operations in the method for determining a size of a cell terminal post described in embodiment 1 or embodiment 2 of the disclosure.

The above described device embodiments are only illustrative, and modules described as separate units for illustration may or may not be physically separated. Additionally, the units shown as respective modules may or may not be physical modules, that is, the units may be located in one place or may be distributed over multiple network modules. Apart or whole of the modules may be selected to realize the objectives of the schemes of the embodiment depending on practical requirements. One of ordinary skill in the art will understand and implement the invention without creative work.

With the description of above embodiments, those skilled in the art can understand clearly that, each of the implementations can be carried out by means of software plus a necessary general-purpose hardware platform, and of course can be carried out by hardware. Based on such understanding, above technical solutions essentially or a part of the technical solutions which makes contribution to related arts can be embodied in a form of a software product, and the computer software product can be stored in a computer readable storage medium such as read-only memory (ROM), random access memory (RAM), programmable read-only memory (PROM), erasable programmable read-only memory (EPROM), one-time programmable read-only memory (OTPROM), electrically-erasable programmable read-only memory (EEPROM), compact disc read-only memory (CD-ROM), other optical disc storages, magnetic disc storages, magnetic tape storages, and any other computer readable medium capable of carrying or storing data.

**Claims**

1. A method for determining a size of a cell terminal post, comprising:

establishing a cell structural model of a cell, wherein the cell comprises a terminal post whose size is to be determined, the cell structural model comprises a terminal-post model of the terminal post, and the terminal-post model has a plurality of pre-determined initial terminal-post sizes;
inputting the cell structural model and each of the plurality of pre-determined initial terminal-post sizes into a pre-built thermal simulation model for thermal simulation processing, to obtain temperature data for each of the plurality of pre-determined initial terminal-post sizes; and
determining all target terminal-post sizes of the terminal post according to temperature data for all of the plurality of pre-determined initial terminal-post sizes.

2. The method for determining a size of a cell terminal post of claim 1, wherein determining all target terminal-post sizes of the terminal post according to the temperature data for all of the plurality of pre-determined initial terminal-post sizes comprises:

   determining all terminal-post size pairs from all of the plurality of pre-determined initial terminal-post sizes according to magnitudes of all of the plurality of pre-determined initial terminal-post sizes, wherein each terminal-post size pair comprises two pre-determined initial terminal-post sizes adjacent in magnitudes;
   for each terminal-post size pair, calculating a relative temperature difference of the terminal-post size pair according to temperature data for two pre-determined initial terminal-post sizes included in the terminal-post size pair; and
   determining all target terminal-post sizes of the terminal post according to all of the plurality of pre-determined initial terminal-post sizes and relative temperature differences of all terminal-post size pairs.

3. The method for determining a size of a cell terminal post of claim 2, wherein the temperature data for each of the plurality of pre-determined initial terminal-post sizes is negatively correlated with a magnitude of each of the plurality of pre-determined initial terminal-post sizes; and
   wherein determining all target terminal-post sizes of the terminal post according to all of the plurality of pre-determined initial terminal-post sizes and the relative temperature differences of all terminal-post size pairs comprises:

   screening out, from all relative temperature differences, all target relative temperature differences satisfying a preset temperature-difference screening condition according to the relative temperature differences of all terminal-post size pairs;
   for each target relative temperature difference, determining a target size range corresponding to the target relative temperature difference according to a target terminal-post size pair corresponding to the target relative temperature difference; and
   determining all target terminal-post sizes of the terminal post according to all values in each of target size ranges corresponding to all target relative temperature differences.

4. The method for determining a size of a cell terminal post of claim 3, wherein screening out, from all relative temperature differences, all target relative temperature differences satisfying the preset temperature-difference screening condition according to the relative temperature differences of all terminal-post size pairs comprises:

   for each relative temperature difference, comparing the relative temperature difference and an adjacent temperature-difference pair of the relative temperature difference to obtain a comparison result of the relative temperature difference, wherein the adjacent temperature-difference pair of the relative temperature difference comprises two relative temperature differences adjacent in temperature-difference magnitudes to the relative temperature difference;
   for each relative temperature difference, determining whether the comparison result of the relative temperature difference satisfies the preset temperature-difference screening condition; and
   in response to determining that the comparison result of the relative temperature difference satisfies the preset temperature-difference screening condition, determining the relative temperature difference as the target relative temperature difference.

5. The method for determining a size of a cell terminal post of claim 4, wherein a comparison result of each relative temperature difference comprises a first comparison result of each relative temperature difference and a second comparison result of each relative temperature difference, wherein the first comparison result of each relative temperature difference indicates a result obtained after comparing the relative temperature difference with a maximum temperature difference in a corresponding adjacent temperature-difference pair, and the second comparison result of each relative temperature difference indicates a result obtained after comparing the relative temperature difference with a minimum temperature difference in the corresponding adjacent temperature-difference pair; and
   wherein for each relative temperature difference, determining whether the comparison result of the relative temperature difference satisfies the preset temperature-difference screening condition comprises:

   for each relative temperature difference, in response to a first comparison result of the relative temperature difference representing that a first difference between the relative temperature difference and a maximum temperature difference in a corresponding adjacent temperature-difference pair is greater than a first preset difference, and a second comparison result of the relative temperature difference representing that a second difference between the relative temperature difference and a minimum temperature difference in the corresponding adjacent temperature-difference pair is less than a second preset difference, determining that the comparison result of the relative temperature difference satisfies the preset temperature-difference screening condition, wherein the first preset difference is greater than the second preset difference; and

in response to the first comparison result of the relative temperature difference representing that the first difference between the relative temperature difference and the maximum temperature difference in the corresponding adjacent temperature-difference pair is less than or equal to the first preset difference, or, the second comparison result of the relative temperature difference representing that the second difference between the relative temperature difference and the minimum temperature difference in the corresponding adjacent temperature-difference pair is greater than or equal to the second preset difference, determining that the comparison result of the relative temperature difference does not satisfy the preset temperature-difference screening condition.

6. The method for determining a size of a cell terminal post of any one of claims 2 to 5, wherein a calculation formula for the relative temperature difference is as follows:

$$\Delta T = \frac{\left|T_2 - T_1\right|}{T_1} \times 100\%\,;$$

wherein $\Delta T$ is a relative temperature difference of any terminal-post size pair, $T_2$ is a temperature data for a minimum terminal-post size in the terminal-post size pair, and $T_1$ is a temperature data for a maximum terminal-post size in the terminal-post size pair.

7. The method for determining a size of a cell terminal post of any one of claims 1 to 5, wherein after determining all target terminal-post sizes of the terminal post according to the temperature data for all of the plurality of pre-determined initial terminal-post sizes, the method further comprises:

for each target terminal-post size, testing the target terminal-post size according to a preset testing method to obtain a test result of the target terminal-post size;

determining a type parameter of each target terminal-post size according to the test result of each target terminal-post size, wherein the type parameter comprises a qualified type or an unqualified type;

for all to-be-processed terminal-post sizes whose type parameters are unqualified types among all target terminal-post sizes, generating a size processing prompt for each to-be-processed terminal-post size, wherein the size processing prompt is used to prompt that a corresponding to-be-processed terminal-post size needs to be subject to a size processing operation, the size processing operation comprises a size design operation, and content of the size design operation comprises redesigning the corresponding to-be-processed terminal-post size;

wherein determining the type parameter of each target terminal-post size according to the test result of each target terminal-post size comprises:

for each target terminal-post size, determining whether the test result of the target terminal-post size satisfies a preset test condition;

in response to determining that the test result of the target terminal-post size satisfies the preset test condition, determining a type parameter of the target terminal-post size as the qualified type; and

in response to determining that the test result of the target terminal-post size does not satisfy the preset test condition, determining the type parameter of the target terminal-post size as the unqualified type.

8. An apparatus for determining a size of a cell terminal post, comprising:

an establishment module configured to establish a cell structural model of the cell, wherein the cell comprises a terminal post whose size is to be determined, the cell structural model comprises a terminal-post model of the terminal post, and the terminal-post model has a plurality of pre-determined initial terminal-post sizes;

a simulation module configured to input the cell structural model and each of the plurality of pre-determined initial terminal-post sizes into a pre-built thermal simulation model for thermal simulation processing, to obtain temperature data for each of the plurality of pre-determined initial terminal-post sizes; and

a determination module configured to determine all target terminal-post sizes of the terminal post according to temperature data for all of the plurality of pre-determined initial terminal-post sizes.

9. The apparatus for determining a size of a cell terminal post of claim 8, wherein in terms of determining all target terminal-post sizes of the terminal post according to the temperature data for all of the plurality of pre-determined initial terminal-post sizes, the determination module is configured to:

determine all terminal-post size pairs from all of the plurality of pre-determined initial terminal-post sizes according to magnitudes of all of the plurality of pre-determined initial terminal-post sizes, wherein each terminal-post size pair comprises two pre-determined initial terminal-post sizes adjacent in magnitudes;
for each terminal-post size pair, calculate a relative temperature difference of the terminal-post size pair according to temperature data for two pre-determined initial terminal-post sizes included in the terminal-post size pair; and
determine all target terminal-post sizes of the terminal post according to all of the plurality of pre-determined initial terminal-post sizes and relative temperature differences of all terminal-post size pairs.

10. The apparatus for determining a size of a cell terminal post of claim 9, wherein the temperature data for each of the plurality of pre-determined initial terminal-post sizes is negatively correlated with a magnitude of each of the plurality of pre-determined initial terminal-post sizes; and
in terms of determining all target terminal-post sizes of the terminal post according to all of the plurality of pre-determined initial terminal-post sizes and the relative temperature differences of all terminal-post size pairs, the determination module is configured to:

screen out, from all relative temperature differences, all target relative temperature differences satisfying a preset temperature-difference screening condition according to the relative temperature differences of all terminal-post size pairs;
for each target relative temperature difference, determine a target size range corresponding to the target relative temperature difference according to a target terminal-post size pair corresponding to the target relative temperature difference; and
determine all target terminal-post sizes of the terminal post according to all values in each of target size ranges corresponding to all target relative temperature differences.

11. The apparatus for determining a size of a cell terminal post of claim 10, wherein in terms of screening out, from all relative temperature differences, all target relative temperature differences satisfying the preset temperature-difference screening condition according to the relative temperature differences of all terminal-post size pairs, the determination module is configured to:

for each relative temperature difference, compare the relative temperature difference and an adjacent temperature-difference pair of the relative temperature difference to obtain a comparison result of the relative temperature difference, wherein an adjacent temperature-difference pair of the relative temperature difference comprises two relative temperature differences adjacent in temperature-difference magnitudes to the relative temperature difference;
for each relative temperature difference, determine whether the comparison result of the relative temperature difference satisfies the preset temperature-difference screening condition; and
for each relative temperature difference, in response to determining that the comparison result of the relative temperature difference satisfies the preset temperature-difference screening condition, determine the relative temperature difference as a target relative temperature difference.

12. The apparatus for determining a size of a cell terminal post of claim 11, wherein a comparison result of each relative temperature difference comprises a first comparison result of each relative temperature difference and a second comparison result of each relative temperature difference, wherein the first comparison result of each relative temperature difference indicates a result obtained after comparing the relative temperature difference with a maximum temperature difference in a corresponding adjacent temperature-difference pair, and the second comparison result of each relative temperature difference indicates a result obtained after comparing the relative temperature difference with a minimum temperature difference in the corresponding adjacent temperature-difference pair; and
in terms of for each relative temperature difference, determining whether the comparison result of the relative temperature difference satisfies the preset temperature-difference screening condition, the determination module is configured to:

for each relative temperature difference, in response to a first comparison result of the relative temperature difference representing that a first difference between the relative temperature difference and a maximum temperature difference in a corresponding adjacent temperature-difference pair is greater than a first preset difference, and a second comparison result of the relative temperature difference representing that a second difference between the relative temperature difference and a minimum temperature difference in the corresponding adjacent temperature-difference pair is less than a second preset difference, determine that the comparison result of the relative temperature difference satisfies the preset temperature-difference screening condition, wherein the first preset difference is greater than the second preset difference; and

in response to the first comparison result of the relative temperature difference representing that the first difference between the relative temperature difference and the maximum temperature difference in the corresponding adjacent temperature-difference pair is less than or equal to the first preset difference, or, the second comparison result of the relative temperature difference representing that the second difference between the relative temperature difference and the minimum temperature difference in the corresponding adjacent temperature-difference pair is greater than or equal to the second preset difference, determine that the comparison result of the relative temperature difference does not satisfy the preset temperature-difference screening condition.

13. The apparatus for determining a size of a cell terminal post of any one of claims 9 to 12, wherein a calculation formula for the relative temperature difference is as follows:

$$\Delta T = \frac{\left| T_2 - T_1 \right|}{T_1} \times 100\% \, ;$$

wherein $\Delta T$ is a relative temperature difference of any terminal-post size pair, $T_2$ is a temperature data for a minimum terminal-post size in the terminal-post size pair, and $T_1$ is a temperature data for a maximum terminal-post size in the terminal-post size pair.

14. An apparatus for determining a size of a cell terminal post, comprising:

a memory storing executable program codes;
a processor coupled to the memory;
wherein the processor is configured to invoke the executable program codes stored in the memory to execute the method for determining a size of a cell terminal post of any one of claims 1 to 7.

15. A computer storage medium, storing computer instructions, wherein the computer instructions, when invoked, are configured to execute the method for determining a size of a cell terminal post of any one of claims 1 to 7.

ESTABLISH A CELL STRUCTURAL MODEL OF A CELL

101

INPUT THE CELL STRUCTURAL MODEL AND EACH OF MULTIPLE PRE-DETERMINED INITIAL TERMINAL-POST SIZES INTO A PRE-BUILT THERMAL SIMULATION MODEL FOR THERMAL SIMULATION PROCESSING, TO OBTAIN TEMPERATURE DATA FOR EACH OF THE MULTIPLE PRE-DETERMINED INITIAL TERMINAL-POST SIZES

102

DETERMINE ALL TARGET TERMINAL-POST SIZES OF THE TERMINAL POST ACCORDING TO TEMPERATURE DATA FOR ALL OF THE MULTIPLE PRE-DETERMINED INITIAL TERMINAL-POST SIZES

103

FIG. 1

TERMINAL POST

CONNECTING SHEET

TAB

$I$ A

0 V

$I$ A

0 V

FIG. 2

FIG. 3

(1)CELL TEMPERATURE FIELD

Temperature (C)
29.202    30.109    31.017    31.925    32.833    33.741

(2)TERMINAL-POST TEMPERATURE FIELD

Temperature (C)
32.569    32.634    32.700    32.766    32.831    32.897

(3)JELLY-ROLL TEMPERATURE FIELD

Temperature (C)
31.013    31.525    32.038    32.551    33.064    33.577

FIG. 4

ESTABLISH A CELL STRUCTURAL MODEL OF A CELL — 201

INPUT THE CELL STRUCTURAL MODEL AND EACH OF THE MULTIPLE PRE-DETERMINED INITIAL TERMINAL-POST SIZES INTO A PRE-BUILT THERMAL SIMULATION MODEL FOR THERMAL SIMULATION PROCESSING, TO OBTAIN TEMPERATURE DATA FOR EACH OF THE MULTIPLE PRE-DETERMINED INITIAL TERMINAL-POST SIZES — 202

DETERMINE ALL TARGET TERMINAL-POST SIZES OF THE TERMINAL POST ACCORDING TO TEMPERATURE DATA FOR ALL OF THE MULTIPLE PRE-DETERMINED INITIAL TERMINAL-POST SIZES — 203

FOR EACH TARGET TERMINAL-POST SIZE, TEST THE TARGET TERMINAL-POST SIZE ACCORDING TO A PRESET TESTING METHOD TO OBTAIN A TEST RESULT OF THE TARGET TERMINAL-POST SIZE — 204

DETERMINE A TYPE PARAMETER OF EACH TARGET TERMINAL-POST SIZE ACCORDING TO A TEST RESULT OF EACH TARGET TERMINAL-POST SIZE — 205

FOR ALL TO-BE-PROCESSED TERMINAL-POST SIZES WHOSE TYPE PARAMETERS ARE UNQUALIFIED TYPES AMONG ALL TARGET TERMINAL-POST SIZES, GENERATE A SIZE PROCESSING PROMPT FOR EACH TO-BE-PROCESSED TERMINAL-POST SIZE — 206

FIG. 5

FIG. 6

301

ESTABLISHMENT
MODULE

302

SIMULATION MODULE

303

DETERMINATION
MODULE

APPARATUS FOR DETERMINING A SIZE OF
A CELL TERMINAL POST

FIG. 7

301

ESTABLISHMENT
MODULE

302

SIMULATION MODULE

305

GENERATION
MODULE

303

DETERMINATION
MODULE

304

TEST MODULE

APPARATUS FOR DETERMINING A SIZE OF A CELL TERMINAL POST

FIG. 8

402

PROCESSOR

COUPLING

401

MEMORY

APPARATUS FOR DETERMINING A SIZE OF A CELL TERMINAL POST

# FIG. 9

## INTERNATIONAL SEARCH REPORT

| International application No. |
| --- |
| **PCT/CN2024/083034** |

| A. | CLASSIFICATION OF SUBJECT MATTER |
| --- | --- |

G06F30/17(2020.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 极柱, 端子, 模型, 仿真, 建模, 热仿真, 温度, battery, pole, model, simulation, thermal, temperature

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117034481 A (EVE ENERGY CO., LTD.) 10 November 2023 (2023-11-10) claims 1-10, and description, paragraphs 37-73 | 1-15 |
| X | CN 115144757 A (SVOLT ENERGY TECHNOLOGY CO., LTD.) 04 October 2022 (2022-10-04) description, paragraphs 22-55 | 1-3, 6-10, 13-15 |
| A | CN 107977500 A (WUHU STC BATTERY SYSTEM LIMITED) 01 May 2018 (2018-05-01) entire document | 1-15 |
| A | CN 113835031 A (SVOLT ENERGY TECHNOLOGY CO., LTD.) 24 December 2021 (2021-12-24) entire document | 1-15 |
| A | US 2018306868 A1 (KOREA UNIVERSITY OF TECHNOLOGY AND EDUCATION INDUSTRY-UNIVERSITY COOPERATION) 25 October 2018 (2018-10-25) entire document | 1-15 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 June 2024** | **20 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/083034**

| Patent document cited in search report | | | Publication date (day/month/year) | Patent family member(s) | | | Publication date (day/month/year) |
|---|---|---|---|---|---|---|---|
| CN | 117034481 | A | 10 November 2023 | None | | | |
| CN | 115144757 | A | 04 October 2022 | None | | | |
| CN | 107977500 | A | 01 May 2018 | None | | | |
| CN | 113835031 | A | 24 December 2021 | None | | | |
| US | 2018306868 | A1 | 25 October 2018 | WO | 2018199434 | A1 | 01 November 2018 |
| | | | | KR | 101792975 | B1 | 02 November 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023108358555